# EUROPÄISCHE PATENTSCHRIFT

(11) **EP 4 511 618 B1**
(45) Veröffentlichungstag und Bekanntmachung des Hinweises auf die Patenterteilung: **08.10.2025**
(21) Anmeldenummer: 23723418.2
(22) Anmeldetag: 20.04.2023
(51) Int. Cl.: G01D 11/24, G01B 21/02, G01B 21/22

(54) **DREHWINKELGEBER**
ROTARY ENCODER
CODEUR ROTATIF

(30) Priorität: 21.04.2022 DE 202022102145 U
(43) Veröffentlichungstag der Anmeldung: 26.02.2025
(73) Patentinhaber: Igus GmbH, 51147 Köln (DE)
(72) Erfinder: JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2023/060366
(87) Internationale Veröffentlichungsnummer: WO 2023/203171

(56) Entgegenhaltungen:
- EP-B1- 1 202 025
- WO-A1-03/008911
- DE-A1- 102011 103 576
- DE-A1- 102015 218 497
- US-A1- 2007 044 567
- US-A1- 2010 163 333
- US-A1- 2012 299 586

## Beschreibung

Die Erfindung betrifft allgemein das Gebiet von Vorrichtungen zum Erfassen von Drehbewegungen, z.B. von Drehwinkeln und Drehwinkeländerungen, wobei zur Erfassung eine mechanische Umwandlung der Drehbewegung in eine andere Bewegung erfolgt.

Die Erfindung betrifft insbesondere einen Drehwinkelgeber zur Drehbewegungserfassung (EN: detection of rotary motion) um eine Drehachse und eine Vorrichtung mit Drehwinkelgeber.

Drehwinkelgeber sind beispielsweise bekannt aus WO 03/008911 A1 und EP 1 202 025 B1. Die WO 03/008911 A1 beschreibt eine Messanordnung zum berührungslosen Erfassen des Drehwinkels und der axialen Lage eines Messobjektes, bei welcher in Abstand von der Stirnfläche in einer von der Rotationsachse durchsetzten Ebene wenigstens ein Chip mit wenigstens einem Sensor zum Erfassen der Drehlage und des axialen Abstandes angeordnet ist. Die EP 1 202 025 B1 beschreibt eine Messeinrichtung zur berührungslosen Erfassung des absoluten Drehwinkels einer Welle, wobei die Welle ein Gewinde trägt, welches mit einem in Achsrichtung der Welle verschiebbaren Reiter in Eingriff steht.

Bei derartigen Drehwinkelgebern wird zwischen Inkremental-Drehwinkelgebern und Absolutwert-Drehwinkelgebern unterschieden. Inkremental-Drehwinkelgeber sind geeignet, eine durch eine Drehbewegung hervorgerufene Winkeländerung gegenüber einer Winkelreferenz innerhalb eines Winkelbereichs zu erfassen. Absolutwert-Drehwinkelgeber sind geeignet, über ihren gesamten bestimmungsgemäßen Drehwinkelbereich hinweg jede durch eine Drehbewegung erreichbare Winkelposition eindeutig zuordenbar als Absolutwerte zu erfassen. Häufig sind Absolut-Drehwinkelgeber auf einen geringen Winkelbereich beschränkt. Zur zuverlässigen Erfassung von Drehbewegungen sind üblicherweise Vorrichtungen mit empfindlichen Sensorkomponenten und speziell angepassten Präzisionsbauteilen erforderlich, was die Vorrichtungen komplex und verschleißanfällig macht.

Die Erfindung betrifft insbesondere einen Absolutwert-Drehwinkelgeber der auch bei Mehrfachumdrehungen für eine absolute Winkelangabe geeignet ist.

Bei Drehwinkelgebern auf dem Gebiet der Erfindung wird eine Drehbewegung zu deren Erfassung mechanisch in eine Translationsbewegung umgewandelt. Dies ist für manche Anwendungsfälle gewünscht, weil ein Weg einer Translationsbewegung häufig einfacher erfassbar ist und die Umwandlung zudem die Erfassung bei Mehrfachumdrehungen erleichtern kann.

Zur Umwandlung der Drehbewegung in die Translationsbewegung sind verschiedene Lösungen bekannt. Eine an sich bekannte Lösung sieht vor, dass der Drehwinkelgeber eine getriebeartige Anordnung nach Art eines Schraubengetriebes aufweist, deren Bauteile die Drehbewegung in eine lineare Translationsbewegung umwandeln unter Veränderung einer axialen Relativstellung der Bauteile zueinander.

Bevorzugt umfassen derartige Drehwinkelgeber einen mit den Bauteilen gekoppelten Abstandssensor zur Bestimmung eines Abstands zu einem Messobjekt, wobei sich der Abstand bei Veränderung einer axialen Relativstellung ändert. Allgemein sind Abstandssensoren von sogenannten Näherungssensoren abzugrenzen, welche eine Präsenz eines Messobjekts in einem Abstandsbereich erfassen und ein davon abhängiges Näherungssignal ausgeben.

Bisherige Lösungen sind wegen des Erfordernisses speziell aufeinander angepasster Getriebebauteile aufwendig in der Fertigung und müssen beim Einsatz unter rauen Bedingungen besonders geschützt werden.

Eine Aufgabe der Erfindung ist es, einen Drehwinkelgeber vorzuschlagen, der möglichst einfach aufgebaut bzw. günstig herstellbar ist. Dabei soll der Drehwinkelgeber dennoch möglichst robust gegenüber Umwelteinflüssen gestaltet sein.

Die Aufgabe wird dadurch gelöst, dass ein erstes Bauteil und ein zweites Bauteil einer getriebeartigen Anordnung des Drehwinkelgebers als Kunststoff-Formteile hergestellt sind und dass die getriebeartige Anordnung am ersten Bauteil ein erstes Gewinde aufweist, welches mit einem zweiten Gewinde am Abstandssensor und/oder am zweiten Bauteil zusammenwirkt zur mechanischen Umwandlung einer Drehbewegung in eine lineare Translationsbewegung.

Ein solcher erfindungsgemäßer Drehwinkelgeber zur Drehbewegungserfassung weist die getriebeartige Anordnung auf, die das erste Bauteil und das zweite Bauteil umfasst. Vorzugsweise ist das erste Bauteil einstückig ausgeführt und/oder das zweite Bauteil einstückig ausgeführt. Bevorzugt ist zumindest eines dieser Bauteile als Spritzgussteil hergestellt, es können insbesondere beide Bauteile als Kunststoff- Spritzgussteile hergestellt sein.

Die getriebeartige Anordnung ist ausgeführt zur mechanischen Umwandlung der Drehbewegung in die lineare Translationsbewegung, welche eine axiale Relativstellung zwischen dem ersten Bauteil und dem zweiten Bauteil verändert. Die getriebeartige Anordnung ist allgemein als Anordnung zu verstehen, die ausgeführt ist eine Bewegung in eine andere Bewegung umzuwandeln. Dies kann in Zusammenwirkung mit anderen Komponenten, insbesondere aber unabhängig davon erfolgen. Bevorzugt verläuft die lineare Translationsbewegung axial, d.h. entlang oder technisch parallel zu einer der Drehbewegung zugeordneten Drehachse.

In einer bevorzugten Ausführung ist der Drehwinkelgeber als Absolutwert-Drehwinkelgeber ausgeführt. Bevorzugt ist der Drehwinkelgeber für Mehrfachumdrehungen geeignet, insbesondere über einen Drehwinkelbereich von zumindest fünf, insbesondere über zumindest zehn, z.B. über mindestens fünfundzwanzig, Umdrehungen hinweg. Bevorzugt weist der Drehwinkelgeber Anschlagsbereiche zur Begrenzung seines Drehwinkelbereichs auf.

Der Drehwinkelgeber umfasst einen Abstandssensor zur Bestimmung eines von der axialen Relativstellung abhängigen Abstands zu einem Messobjekt. Das Messobjekt kann ein beliebig definierter Bereich, eine Messfläche, ein Messpunkt oder dergleichen sein. Das Messobjekt kann Bestandteil des Drehwinkelgebers, insbesondere eines der Bauteile sein. Das Messobjekt kann aber auch separat vom ersten Bauteil und vom zweiten Bauteil ausgeführt sein, z.B. Teil einer externen Vorrichtung.

Besonders bevorzugt ist der Abstandssensor als berührungsloser Abstandssensor ausgeführt, wodurch zur Bestimmung des Abstands von dem Messobjekt kein unmittelbarer physischer Kontakt mit dem Messobjekt erforderlich ist. Bevorzugt besteht der Abstandssensor aus relativ zueinander unbeweglichen Komponenten. Vorzugsweise verlaufen das erste Gewinde und das zweite Gewinde entlang der Drehachse. Bevorzugt ist der Abstandssensor durch das erste Bauteil und/oder das zweite Bauteil radial umschlossen, wodurch ein verbesserter Schutz des Abstandssensors vor Umwelteinflüssen gewährleistet ist.

Allgemein bevorzugt weist zumindest das erste Gewinde oder das zweite Gewinde eine gleichbleibende Gewindegeometrie, insbesondere einen durchgehenden Gewindesteg, insbesondere eine konstante Gewindetiefe, insbesondere eine konstante Gewindesteigung, auf. Dies ermöglicht ein zuverlässig geführtes Ineinandergreifen der Gewinde. In einer Ausführungsform ist zumindest eines der beiden Gewinde abschnittsweise unterbrochen ausgeführt, was insbesondere eine Verwendung des jeweiligen Gewindes mit unterschiedlichen Gewinden ermöglicht.

Durch das beschriebene Zusammenwirken von erstem und zweitem Bauteil mittels des ersten und des zweiten Gewindes kann der Drehwinkelgeber besonders einfach aufgebaut sein, was eine kostengünstige, insbesondere massenproduktionstaugliche, und robuste Gestaltung des Drehwinkelgebers ermöglicht. Gegenüber herkömmlichen Drehwinkelgebern ist eine Anzahl zur Realisierung des Drehgebers erforderlicher Komponenten auf ein Minimum reduziert. Die Erfinder haben zudem festgestellt, dass durch geeignete Abstimmung der Gewinde auch bei Verwendung von preiswerten Abstandssensoren mit geringerer Genauigkeit eine für industrielle Zwecke genaue Erfassung der Drehbewegung gewährleistet ist.

In einer Ausführungsform ist das erste Gewinde gemeinsam und/oder integral mit dem ersten Bauteil hergestellt. In einer Ausführungsform ist das erste Gewinde getrennt von dem ersten Bauteil hergestellt und mit dem ersten Bauteil, insbesondere formschlüssig, zusammengefügt. Bevorzugt kann das erste Gewinde aus einem zum ersten Bauteil unterschiedlichen Material hergestellt sein.

In einer Ausführungsform ist zumindest ein Teil des mit dem ersten Gewinde zusammenwirkenden zweiten Gewindes gemeinsam und/oder integral mit dem zweiten Bauteil hergestellt. Dies kann, insbesondere für zumindest 50%, insbesondere zumindest 70% der axialen Länge des zweiten Gewindes gelten. In einer Ausführungsform ist das zweite Gewinde getrennt von dem zweiten Bauteil hergestellt und mit dem zweiten Bauteil, insbesondere formschlüssig, zusammengefügt. Bevorzugt kann das zweite Gewinde aus einem zum zweiten Bauteil unterschiedlichen Material hergestellt sein.

Durch integrale Herstellung von Gewinde und Bauteil ist der Aufbau des Drehwinkelgebers weiter vereinfacht.

In einer bevorzugten Ausführungsform ist zumindest ein Teil des mit dem ersten Gewinde zusammenwirkenden zweiten Gewindes integral mit zumindest einem Bereich des Abstandssensors hergestellt. Dies kann, insbesondere für zumindest 50%, insbesondere zumindest 70% der axialen Länge des zweiten Gewindes gelten.

Der Abstandsensor kann ein Sensorgehäuse und eine Sensorkomponente umfassen, wobei das Sensorgehäuse die Sensorkomponente, insbesondere fluiddicht, umschließt. Die Sensorkomponente dient zur Erfassung des Abstands zum Messobjekt. Durch das Sensorgehäuse ist die Sensorkomponente auf einfache Weise geschützt. Bevorzugt ist der vorgenannte Bereich des Abstandssensors Teil des Sensorgehäuses. Ein Teil des oder das zweite Gewinde kann also am Sensorgehäuse vorgesehen sein, insbesondere integral mit diesem hergestellt sein. Insbesondere ist das Sensorgehäuse aus Metall hergestellt, was einerseits verbesserten Schutz der Sensorkomponente gewährleistet und andererseits bei integraler Ausführung des Gewindes eine vorteilhafte Gleitpaarung mit einem aus Kunststoff hergestellten ersten Gewinde ermöglicht.

In einer Ausführungsform ist das zweite Gewinde als zu dem ersten Bauteil weisendes Innengewinde ausgeführt. In einer Ausführungsform ist das zweite Gewinde als ein zu dem ersten Bauteil weisendes Außengewinde ausgeführt. Insbesondere weist das erste Gewinde zum Abstandssensor.

Gemäß einer vorteilhaften Ausführungsform weist zumindest das erste Gewinde oder das zweite Gewinde, d.h. insbesondere das erste Gewinde und das zweite Gewinde, einen Flankenwinkel auf, der zumindest 40°, insbesondere zumindest 55°, insbesondere zwischen 55° und 65°, beträgt. Der Flankenwinkel beschreibt einen Winkel zwischen axial zueinander weisenden Flanken zweier benachbarter Gewindegänge eines Gewindes. Besonders bevorzugt sind das erste und/oder das zweite Gewinde als metrisches, insbesondere als ISO-metrisches, Gewinde, insbesondere als Regelgewinde oder Feingewinde, besonders bevorzugt als M12-Gewinde, ausgeführt. Bevorzugt weisen das erste und das zweite Gewinde einen Nenndurchmesser von zumindest 5 mm, bevorzugt maximal 20 mm auf. Derartige Gewinde sind wegen ihres steilen Flankenwinkels als Befestigungsgewinde verbreitet. Es hat sich jedoch herausgestellt, dass trotzdem eine zuverlässige mechanische Umwandlung der Drehbewegung in eine lineare Translationsbewegung gewährleistet ist, wodurch der Drehwinkelgeber noch einfacher und kostengünstiger herstellbar ist.

Besonders bevorzugt sind das erste Gewinde und das zweite Gewinde dergestalt ausgeführt, dass die getriebeartige Anordnung eine um eine einzelne Umdrehung ausgeführte Drehbewegung in eine lineare Translationsbewegung über einen, insbesondere axialen, Weg von 0,25 mm bis 25 mm, insbesondere von 0,5 mm bis 10 mm, insbesondere von 1 mm bis 2,5 mm, umwandelt. Dazu weisen die Gewinde entsprechend korrespondierende Gewindesteigungen auf. Besonders bevorzugt stimmt der Weg der linearen Translationsbewegung über eine einzelne Umdrehung hinweg mit der Gewindesteigung der jeweiligen Gewinde überein. Allgemein bevorzugt beträgt ein maximaler Weg der linearen Translationsbewegung zumindest 5 mm, insbesondere zumindest 15 mm, insbesondere nicht mehr als 60 mm.

In einer vorteilhaften Ausführungsform ist der Abstandssensor zumindest als induktiver Sensor ausgeführt. In einer vorteilhaften Ausführungsform ist der Abstandssensor zumindest als kapazitiver Sensor ausgeführt. In einer Ausführungsform ist der Abstandssensor zumindest als optischer Sensor ausgeführt.

Der Abstandssensor kann allgemein bevorzugt weitere nach unterschiedlichem Messprinzip arbeitende Komponenten umfassen, beispielsweise zur Erhöhung einer Messgenauigkeit. In einer bevorzugten Ausführungsform ist der Abstandssensor ausgebildet, den Abstand zum Messobjekt durch Laufzeitmessung zu ermitteln, d. h. durch Ermittlung einer Zeit, die ein Signal für ein Durchlaufen einer Messstrecke zwischen dem Abstandssensor und dem Messobjekt benötigt. Allgemein bevorzugt sind der Abstandssensor und das Messobjekt überlappungsfrei hintereinander angeordnet. Bevorzugt ist der Abstandssensor ausgeführt, für jeden von der axialen Relativstellung abhängigen Abstand des Abstandssensors zum Messobjekt eine unterschiedliche Induktivität, eine unterschiedliche Kapazität und/oder eine unterschiedliche Laufzeit eines Signals zu erfassen.

In einer Ausführungsform ist das Messobjekt als axial zum Abstandssensor weisender flächiger Bereich ausgeführt. In einer bevorzugten Ausführungsform ist das Messobjekt als, insbesondere aus Metall hergestellte, Platte ausgeführt. Ein aus Metall hergestelltes Messobjekt kann vorteilhaft mit kapazitiven bzw. induktiven Sensoren zusammenwirken. Bevorzugt ist die Platte an dem ersten Bauteil, insbesondere an einem axial distalen Ende des ersten Bauteils, axial gehalten. In einer anderen Ausführungsform ist auf die Platte verzichtet, wobei der Drehwinkelgeber dergestalt an einem Maschinenteil anordenbar ist, dass durch den Abstandssensor ein von der axialen Relativstellung abhängiger Abstand zu einem als Messobjekt dienenden, insbesondere zum Abstandssensor weisenden, Bereich des Maschinenteils bestimmbar ist. Bevorzugt ist ein solches Maschinenteil als Welle, Achse oder Buchse ausgebildet.

In einer vorteilhaften Ausführungsform ist der Abstandssensor drehfest, insbesondere positionsfest am zweiten Bauteil befestigt. Dazu weist das zweite Bauteil bevorzugt eine Sensorbefestigung auf, die zur Befestigung des Abstandssensors an dem zweiten Bauteil mit dem Abstandssensor kraft- und/oder formschlüssig zusammenwirkt.

Insbesondere greift die Sensorbefestigung zur Befestigung des Abstandssensors radial in eine Ausnehmung des Abstandssensors ein und/oder klemmt den Abstandsensor radial relativ zum zweiten Bauteil fest.

In einer Ausführungsform ist der Abstandssensor mit dem zweiten Bauteil positionsfest verklebt und/oder verschweißt. Dies ermöglicht eine besonders einfache Fertigung des Drehwinkelsensors und kann dazu beitragen, den Abstandsensor von Umwelteinflüssen zu schützen.

Zur Befestigung des Drehwinkelgebers an relativ zueinander drehbaren Maschinenteilen weisen das erste Bauteil und das zweite Bauteil in einer vorteilhaften Ausführungsform jeweils einen Befestigungsbereich auf. Der jeweilige Befestigungsbereich ermöglicht, insbesondere wahlweise, eine axial positionsfeste Befestigung an dem jeweiligen Maschinenteil und/oder eine axial verschiebbare Befestigung an dem jeweiligen Maschinenteil. Eines der beiden Bauteile, insbesondere das erste Bauteil, ist mittels seines Befestigungsbereichs an einem ersten der Maschinenteile axial positionsfest befestigbar und das andere der beiden Bauteile, insbesondere das zweite Bauteil, ist mittels seines Befestigungsbereich an einen zweiten der Maschinenteile axial verschiebbar und insbesondere drehfest befestigbar. Dadurch ist ein Verkanten bei Veränderung der Relativstellung zwischen den beiden Bauteilen unwahrscheinlich.

Gemäß einer bevorzugten Ausführungsform ist das erste Bauteil und/oder das zweite Bauteil materialeinheitlich aus einem faserverstärkten, insbesondere glasfaserverstärkten und/oder kohlefaserverstärkten, Kunststoff hergestellt. Besonders bevorzugt sind das erste und das zweite Bauteil aus einem gleichen Kunststoff hergestellt, insbesondere aus einem, beispielsweise durch Anreicherung mit Festschmierstoffen, tribologisch optimierten Kunststoff.

Besonders bevorzugt umfasst der Drehwinkelgeber eine Führung, mittels der das erste Bauteil und das zweite Bauteil relativ zueinander axial, insbesondere gleitend, verschiebbar geführt sind. Besonders bevorzugt ist die Führung durch aneinander gleitend anliegende axial verlaufende, insbesondere zylindrische, Führungsflächen des ersten Bauteils und des zweiten Bauteils verwirklicht. Durch die Führung ist ein Verkippen der Bauteile bei Veränderung der axialen Relativstellung vermieden.

Allgemein bevorzugt sind das erste Bauteil und das zweite Bauteil koaxial zum Abstandssensor angeordnet. Vorzugsweise sind das erste Bauteil und das zweite Bauteil koaxial zu einer Drehachse von relativ zueinander drehbaren Maschinenteilen zur Erfassung einer Drehbewegung dieser Maschinenteile relativ zueinander anordenbar. Bevorzugt ist der Abstandssensor koaxial zu dieser Drehachse anordenbar. Allgemein bevorzugt ist der Drehwinkelgeber im Wesentlichen rotationssymmetrisch um die Drehachse aufgebaut.

In besonders kompakten Ausführungsformen besteht der Drehwinkelgeber aus maximal sechs, insbesondere maximal vier separaten Komponenten, beispielsweise dem ersten Bauteil, dem zweiten Bauteil, dem Abstandssensor und einem separaten Messobjekt. Daneben können weitere Komponenten zur Befestigung oder zum Anschluss des Drehwinkelgebers vorgesehen sein. Besonders bevorzugt besteht der Drehwinkelgeber aus dem ersten Bauteil, dem zweiten Bauteil und dem Abstandsensor. Insbesondere weist das erste Bauteil oder das zweite Bauteil das Messobjekt auf.

In einer besonders kostengünstigen Ausführungsform ist buw. sind das erste Bauteil und/oder das zweite Bauteil einstückig ausgeführt. Ganz besonders bevorzugt ist bzw. sind das erste Bauteil als einstückiges bzw. einteiliges Spritzgussteil, vorzugsweise aus einem Thermoplast, und/oder das zweite Bauteil als einstückiges bzw. einteiliges Spritzgussteil, vorzugsweise aus einem Thermoplast, ausgeführt. Der verwendete Kunststoff kann dabei in einem oder beiden Bauteilen ggf. faserverstärkt sein.

Gemäß einem weiteren Aspekt schlägt die Erfindung eine Vorrichtung vor, die einen Drehwinkelgeber mit erfindungsgemäßen Merkmalen umfasst. Die Vorrichtung dient zum Auf- und Abwickeln einer Leitungsführungseinrichtung, insbesondere einer Energieführungskette, zur geschützten Führung von Leitungen, Kabeln, Schläuchen oder dergleichen zwischen einer ersten Anschlussstelle und einer zu dieser relativbeweglichen zweiten Anschlussstelle. Besonders bevorzugt umfasst die Vorrichtung die Leitungsführungseinrichtung bzw. die Energieführungskette. Die Vorrichtung umfasst eine Halterung und eine an der Halterung drehbar gelagerte Trommel zum Auf- und Abwickeln der Leitungsführungseinrichtung. Der Drehwinkelgeber ist an der Trommel angeordnet zur Erfassung einer Drehbewegung der Trommel beim Auf- und Abwickeln der Leitungsführungseinrichtung. Besonders bevorzugt ist von dem ersten Bauteil und dem zweiten Bauteil des Drehwinkelgebers eines der Bauteile drehfest mit der Trommel verbunden und das andere der Bauteile drehfest mit der Halterung verbunden zur mechanischen Umwandlung der Drehbewegung der Trommel in eine lineare Translationsbewegung, welche bei einer Drehbewegung der Trommel relativ zur Halterung eine axiale Relativstellung zwischen beiden Bauteilen verändert.

Die Erfindung betrifft gemäß einem weiteren Aspekt ein Verfahren zur Erfassung einer Drehbewegung, insbesondere einer Mehrfachumdrehung, insbesondere mittels eines erfindungsgemäßen Drehwinkelgebers. Eine getriebeartige Anordnung wandelt die Drehbewegung, mittels eines ersten Gewindes an einem ersten Bauteil, welches mit einem zweiten Gewinde an einem zweiten Bauteil und/oder an einem Abstandssensor zusammenwirkt, mechanisch in eine lineare Translationsbewegung um. Durch die Translationsbewegung wird ein Abstand eines Abstandssensors zu einem Messobjekt verändert, wobei ein von dem Abstand abhängiges Abstandssignal zur Angabe der Drehbewegung ausgegeben wird. Ferner betrifft die Erfindung eine Verwendung des Drehwinkelgebers zur Erfassung einer Drehbewegung. Das Verfahren bzw. die Verwendung können Merkmale aufweisen, die vorstehend im Zusammenhang mit dem Drehwinkelgeber oder der Vorrichtung beschrieben sind.

Weitere vorteilhafte Merkmale und Wirkungen der Erfindung werden nachfolgend - ohne Beschränkung der Allgemeinheit des Vorgenannten - anhand bevorzugter Ausführungsbeispiele mit Bezug auf die beigefügten Figuren erläutert. Es zeigen:
- FIG. 1A:: eine Prinzipskizze einer Schrägansicht eines ersten Ausführungsbeispiels eines erfindungsgemäßen Drehwinkelgebers;
- FIG. 1B:: eine Schnittansicht des Ausführungsbeispiels aus FIG. 1A;
- FIG. 2A:: eine Prinzipskizze einer Schrägansicht eines zweiten Ausführungsbeispiels des Drehwinkelgebers;
- FIG. 2B:: eine Schnittansicht des Ausführungsbeispiels aus FIG. 2A; und
- FIG. 3:: eine schematische Prinzipskizze einer erfindungsgemäßen Vorrichtung mit Drehwinkelgeber zum Auf- und Abwickeln einer Leitungsführungseinrichtung.

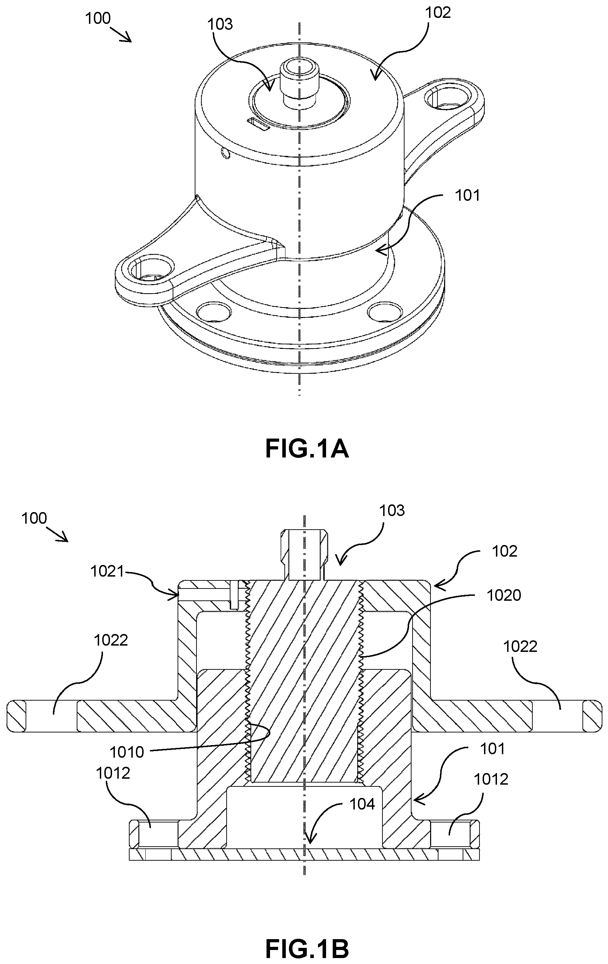

Die FIG. 1A-1B zeigen ein erstes Ausführungsbeispiel des erfindungsgemäßen Drehwinkelgebers 100. Der Drehwinkelgeber 100 umfasst eine getriebeartige Anordnung mit einem ersten Bauteil 101 und einem zweiten Bauteil 102 sowie einen Abstandssensor 103. Der Abstandssensor 103 ist im ersten Bauteil 101 und im zweiten Bauteil 102 angeordnet und mit den Bauteilen 101, 102 verbunden. Das zweite Bauteil 102 weist einen topfartigen Abschnitt auf, in dem das erste Bauteil 101 abschnittsweise aufgenommen ist. Der Abstandssensor 103, das erste Bauteil 101 und das zweite Bauteil 102 sind koaxial zu einer gemeinsamen Drehachse angeordnet.

Das erste Bauteil 101 weist ein integral mit dem ersten Bauteil 101 ausgebildetes erstes Gewinde 1010 auf, welches mit einem zweiten Gewinde 1020, das integral mit einem Sensorgehäuse des Abstandssensors 103 ausgebildet ist zusammenwirkt. Das zweite Gewinde 1020 erstreckt sich über etwa 70% der axialen Erstreckung des Sensorgehäuses hinweg. Das zweite Bauteil 102 weist ein weiteres Gewinde auf, welches mit dem zweiten Gewinde 1020 des Abstandssensors 103 zur axialen Fixierung des zweiten Bauteils 102 an dem Abstandsensor 103 zusammenwirkt.

Der Abstandssensor 103 ist auf eine an einem Ende des ersten Bauteils 101 angeordnete Platte gerichtet, deren zum Abstandssensor 103 weisender Bereich als Messobjekt 104 für den Abstandssensor 103 zur Bestimmung eines freien Abstands zwischen dem Messobjekt 104 und dem Abstandssensor 103 dient. Der Abstand zwischen Messobjekt 104 und Abstandssensor 103 ist von einer Relativstellung der Bauteile 101, 102 zueinander, d.h. von einer Stellung des ersten Bauteils 101 relativ zum zweiten Bauteil 102 abhängig.

Eine Drehbewegung des ersten Bauteils 101 und des zweiten Bauteils 102 relativ zueinander wird, in Art eines Getriebes, durch Zusammenwirken von erstem Gewinde 1010 und zweitem Gewinde 1020 in eine lineare Translationsbewegung entlang der Drehachse umgewandelt. Dadurch wird die axiale Relativstellung zwischen dem ersten Bauteil 101 und dem zweiten Bauteil 102 verändert. Bei Änderung der axialen Relativstellung zwischen den beiden Bauteilen 101, 102 verändert sich entsprechend der Abstand zwischen dem Messobjekt 104 und dem Abstandsensor 103.

Der Abstandsensor 103 ist in einer passend gestalteten Aufnahme im zweiten Bauteil 102 zumindest teilweise aufgenommen und hierin an diesem axial und drehfest befestigt. Als Sensorbefestigung 1021 umfasst das zweite Bauteil 102 eine radiale Öffnung und eine axiale Ausnehmung, in die eine Mutter (nicht dargestellt) verdrehsicher eingesetzt ist. In die radiale Öffnung ist ein Gewindeteil (nicht dargestellt) eingeführt und mit der Mutter dergestalt verschraubt, dass es den Abstandsensor 103 in dessen Aufnahme radial gegen den Körper des zweiten Bauteils 102 presst zur Herstellung einer zumindest kraftschlüssigen Verdrehsicherung für den Abstandssensor 103 relativ zum zweiten Bauteil 102.

Der Abstandssensor 103 ist bevorzugt als handelsüblicher induktiver Sensor ausgeführt, der mit dem Messobjekt 104 dergestalt zusammenwirkt, dass eine Veränderung des Abstandes des Abstandsensors 103 zum Messobjekt 104 eine zu dem Abstand zwischen dem Abstandssensor 103 und dem Messobjekt 104 in axialer Richtung proportionale Veränderung einer durch den Abstandsensor 103 erfassten Induktivität bewirkt, die als Signal, z.B. entsprechend variable Analogspannung, abgreifbar ist. Auf die Platte kann verzichtet sein, wenn der Drehwinkelgeber 100 derart an einem Maschinenteil befestigt ist, dass ein zum Abstandssensor 103 weisender metallischer Bereich des Maschinenteils selbst das Messobjekt 104 zur Bestimmung des von der axialen Relativstellung abhängigen Abstands bereitstellt.

In FIG.1A-1B liegen das erste Bauteil 101 und das zweite Bauteil 102 jeweils mit zylindrischen Flächen gleitend aneinander an. Dadurch ist eine Führung der Bauteile 101, 102 relativ zueinander geschaffen, die eine weitgehend verkippungsfreie Ausrichtung der Bauteile 101, 102 relativ zueinander und damit die gewünschte Ausrichtung des Abstandssensors 103 gewährleistet.

Das erste Bauteil 101 weist an seinem axial vom zweiten Bauteil 102 wegweisenden Ende einen Flanschbereich auf mit Durchgangslöchern als Befestigungsbereich 1012 zur axial positionsfesten Befestigung an einem erste Maschinenteil.

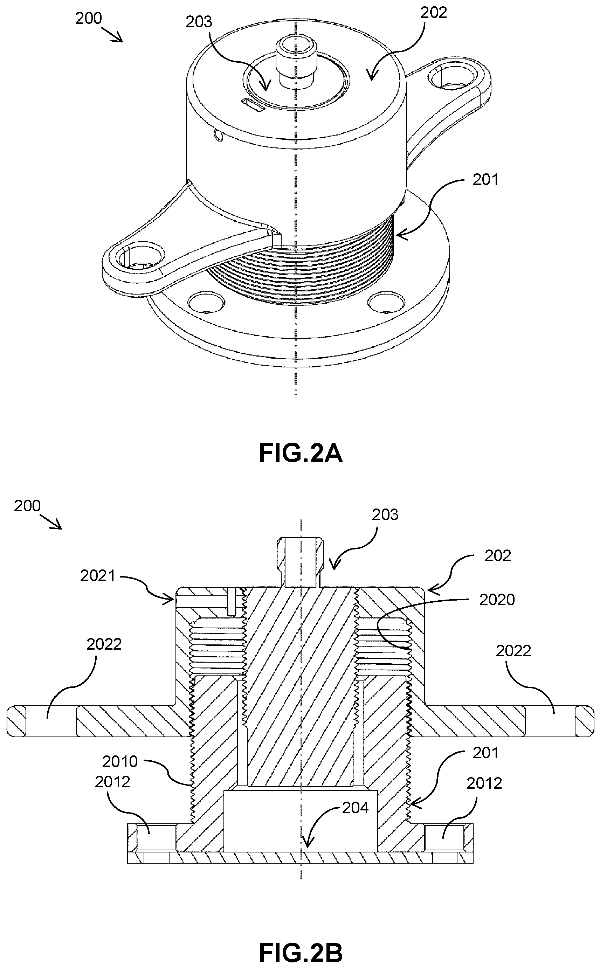

Der Befestigungsbereich 1012 des ersten Bauteils 101 ist zugleich zur Befestigung der Platte an dem ersten Bauteil 101 vorgesehen. Das zweite Bauteil 102 umfasst Arme, die sich radial von einem topfartig gestalteten Bereich wegerstrecken und an deren radialen Enden Durchgangslöcher als Befestigungsbereich 1022 zur axial verschiebbaren Befestigung an einem zweiten Maschinenteil vorgesehen sind. Die Arme erstrecken sich radial über das erste Bauteil 101 hinweg, sodass der Befestigungsbereich 1022 außerhalb der radialen Erstreckung des ersten Bauteils 101 angeordnet ist. Die Schnitte der Schnittansichten in FIG. 1A und FIG. 2A verlaufen durch die jeweiligen Arme und die jeweilige Drehachse des jeweiligen Drehwinkelsensors 100, 200.

Das erste Maschinenteil und des zweite Maschinenteil (beide nicht dargestellt) drehen im Betrieb relativ zueinander, unter Erzeugung einer mittels des Drehwinkelgebers 100 zu erfassenden Drehbewegung. Die Durchgangslöcher sind als Langlöcher ausgeführt. Die Verbindung mit dem zweiten Maschinenteil kann beispielsweise mittels axial durch die Langlöcher des Befestigungsbereichs 1022 geführte Stiften erfolgen. Die Drehachse der im Betrieb relativ zueinander drehenden Maschinenteile fällt dabei mit der Drehachse des Drehwinkelgebers 100 zusammen. Bei Verdrehung der verbundenen Maschinenteile wird deren Drehbewegung über die Befestigungsbereiche 1012, 1022 auf den Drehwinkelgeber 100 übertragen und in eine lineare Translationsbewegung zur Änderung der Relativstellung der Bauteile 101, 102 umgewandelt. Der Befestigungsbereich ist bei Veränderung der Relativstellung relativ zu den Stiften axial verschiebbar und drehfest durch den Befestigungsbereich 1022 am zweiten Bauteil 102 gesichert. Durch das Vorsehen von Langlöchern, die sich mit ihrer Länge radial zur Drehachse erstrecken, kann ein Verklemmen bei Veränderung der Relativstellung vermieden werden.

Der Abstandssensor 103 weist an einer von dem Messobjekt 104 axial wegweisenden Seite einen Sensoranschluss zum Anschluss an eine Auswerteeinrichtung auf.

In den FIG. 2A-2B ist ein zweites Ausführungsbeispiel des erfindungsgemäßen Drehwinkelgebers 200 gezeigt. Das zweite Ausführungsbeispiel weist eine Vielzahl von mit dem ersten Ausführungsbeispiel identischen Merkmalen auf, sodass im Folgenden lediglich auf dazu unterschiedliche Merkmale eingegangen wird. Wie im ersten Ausführungsbeispiel weist der Abstandssensor 203 ein Gewinde auf. Im Unterschied zum ersten Ausführungsbeispiel ist das Gewinde nicht zur Zusammenwirkung mit dem ersten Gewinde 2010 des ersten Bauteils ausgeführt. Das erste Gewinde 2010 ist als zum zweiten Bauteil 202 weisendes Außengewinde ausgeführt. Das mit dem erste Gewinde 2010 zusammenwirkende zweite Gewinde 2020 ist integral mit den zweiten Bauteil 202 ausgeführt. Dabei ist auf eine Führung der Bauteile 201, 202 durch jeweils unmittelbare gleitende Anlage verzichtet, da die Gewinde 2010, 2020 im Bereich der zylindrischen Flächen angeordnet sind. Der Abstandssensor 203 ist als kapazitiver Sensor ausgeführt, der dergestalt mit dem Messobjekt 204 zusammenwirkt, dass eine Veränderung des Abstandes des Abstandsensors 203 relativ zum Messobjekt 204 eine zu dem Abstand zwischen dem Abstandssensor 203 und dem Messobjekt 204 in axialer Richtung proportionale Veränderung einer durch den Abstandsensor 203 erfassten Kapazität bewirkt. Das erste Gewinde 2010 und das zweite Gewinde 2020 wirken zusammen zur Umwandlung einer Drehbewegung des ersten Bauteils 201 relativ zum zweiten Bauteil 202 um eine Drehachse in eine lineare Translationsbewegung, die eine axiale Relativstellung zwischen den beiden Bauteilen 201, 202 verändert.

Durch Ausführung der Gewinde 2010, 2020 am ersten Bauteil 201 und am zweiten Bauteil 202 kann ohne Nachbearbeitung eines vorgegebenen Abstandssensors 203 eine angepasste Gewindegeometrie gewählt werden, wodurch die getriebeartige Anordnung zu einer Vielzahl von Abstandssensoren kompatibel ist. Die Gewinde 2010, 2020 sind ferner kostengünstig integral mit dem ersten Bauteil 201 bzw. dem zweite Bauteil 202 herstellbar. Außerdem kann eine Gewindelänge des ersten Gewindes 2010 bzw. des zweiten Gewindes 2020 unabhängig von einer Erstreckung des Abstandssensors 203 gewählt werden.

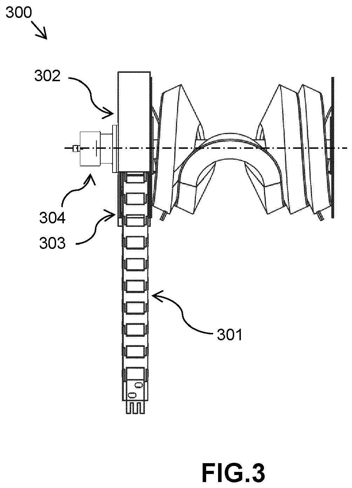

FIG. 3 zeigt eine schematische Prinzipskizze eines Ausführungsbeispiels einer erfindungsgemäßen Vorrichtung 300 zum Auf- und Abwickeln einer Leitungsführungseinrichtung 301. Die Vorrichtung 300 umfasst eine Halterung 302, an der eine Trommel 303 drehbar gelagert ist. Die Leitungsführungseinrichtung 301 kann auf die Trommel 303 auf- bzw. abgewickelt werden unter Erzeugung einer Drehbewegung der Trommel 303 relativ zur Halterung 302 um eine Drehachse.

Ein erfindungsgemäßer Drehwinkelgeber 304 ist koaxial mit der Drehachse, wobei grundsätzlich eine koaxiale Position fertigungs- oder konstruktiv bedingt von einer idealkoaxialen Position abweichen kann, an einem axialen Ende der Halterung 302 und der Trommel 303 befestigt. Eines der beiden Bauteile des Drehwinkelgebers 304 ist an der Halterung 302 und das andere der Bauteile ist an der Trommel 303 befestigt. Dadurch kann der Drehwinkelgeber 304 beim Auf- und Abwickeln der Leitungsführungseinrichtung 301 die Drehbewegung der Trommel 303 relativ zur Halterung 302 erfassen.

### Bezugszeichenliste

- 100: Drehwinkelgeber
- 101: erstes Bauteil
- 102: zweites Bauteil
- 103: Abstandssensor
- 104: Messobjekt
- 200: Drehwinkelgeber
- 201: erstes Bauteil
- 202: zweites Bauteil
- 203: Abstandssensor
- 204: Messobjekt
- 300: Vorrichtung
- 301: Leitungsführungseinrichtung
- 302: Halterung
- 303: Trommel
- 304: Drehwinkelgeber
- 1010: erstes Gewinde
- 1012: Befestigungsbereich
- 1020: zweites Gewinde
- 1021: Sensorbefestigung
- 1022: Befestigungsbereich
- 2010: erstes Gewinde
- 2012: Befestigungsbereich
- 2020: zweites Gewinde
- 2021: Sensorbefestigung
- 2022: Befestigungsbereich

## Patentansprüche

1. Drehwinkelgeber (100, 200, 304), insbesondere Absolutwert-Drehwinkelgeber, zur Drehbewegungserfassung, insbesondere für Mehrfachumdrehungen, umfassend
- eine getriebeartige Anordnung, mit einem ersten Bauteil (101, 201) und einem zweiten Bauteil (102, 202), zur mechanischen Umwandlung einer Drehbewegung in eine lineare Translationsbewegung, welche eine axiale Relativstellung zwischen beiden Bauteilen (101, 201, 102, 202) verändert;
- einen Abstandssensor (103, 203), insbesondere einen berührungslosen Abstandssensor, zur Bestimmung eines von der axialen Relativstellung abhängigen Abstands zu einem Messobjekt (104, 204);
**dadurch gekennzeichnet,**
- **dass** das erste Bauteil (101, 201) und das zweite Bauteil (102, 202) als Kunststoff-Formteile hergestellt sind, insbesondere als Spritzgussteile; und
- **dass** die getriebeartige Anordnung am ersten Bauteil (101, 201) ein erstes Gewinde (1010, 2010) aufweist, welches mit einem zweiten Gewinde (1020, 2020) am Abstandssensor (103, 203) und/oder am zweiten Bauteil (102, 202) zusammenwirkt zur mechanischen Umwandlung einer Drehbewegung in eine lineare Translationsbewegung.

2. Drehwinkelgeber (100, 200, 304) nach Anspruch 1,
**dadurch gekennzeichnet, dass** das erste Gewinde (1010, 2010) integral mit dem ersten Bauteil (101, 201) hergestellt ist, wobei vorzugsweise zumindest das erste Bauteil (101, 201) und/oder das zweite Bauteil (102, 202) als einstückiges Kunststoff-Formteil hergestellt ist.

3. Drehwinkelgeber (100, 200, 304) nach einem der Ansprüche 1 oder 2,
**dadurch gekennzeichnet, dass** zumindest ein Teil des mit dem ersten Gewinde (1010, 2010) zusammenwirkenden zweiten Gewindes (1020, 2020) integral mit dem zweiten Bauteil (102, 202) hergestellt ist, wobei vorzugsweise das zweite Gewinde (1020, 2020) als zu dem ersten Bauteil (101, 201) weisendes Innengewinde ausgeführt ist.

4. Drehwinkelgeber (100, 200, 304) nach einem der vorangehenden Ansprüche,
**dadurch gekennzeichnet, dass** zumindest ein Teil des mit dem ersten Gewinde (1010, 2010) zusammenwirkenden zweiten Gewindes (1020, 2020) integral mit einem Bereich des Abstandssensors (103, 203), insbesondere mit einem Sensorgehäuse des Abstandssensors (103, 203), welches eine Sensorkomponente des Abstandssensors (103, 203), insbesondere fluiddicht, umschließt, hergestellt ist, wobei vorzugsweise das zweite Gewinde (1020, 2020) als zu dem ersten Bauteil (101, 201) weisendes Außengewinde ausgeführt ist.

5. Drehwinkelgeber (100, 200, 304) nach einem der vorangehenden Ansprüche,
**dadurch gekennzeichnet, dass** das erste Gewinde (1010, 2010) und/oder das zweite Gewinde (1020, 2020) einen Flankenwinkel von zumindest 40°, insbesondere von zumindest 55°, aufweisen.

6. Drehwinkelgeber (100, 200, 304) nach einem der vorangehenden Ansprüche,
**dadurch gekennzeichnet, dass** das erste Gewinde (1010, 2010) und das zweite Gewinde (1020, 2020) dergestalt korrespondierende Gewindesteigungen aufweisen, dass die getriebeartige Anordnung eine um eine einzelne Umdrehung ausgeführte Drehbewegung in eine lineare Translationsbewegung über einen Weg von 0,25 mm bis 25 mm, insbesondere von 0,5 mm bis 10 mm, umwandelt.

7. Drehwinkelgeber (100, 200, 304) nach einem der vorangehenden Ansprüche,
**dadurch gekennzeichnet, dass** der Abstandssensor (103, 203) zumindest als induktiver oder als kapazitiver Sensor ausgeführt ist, wobei insbesondere der Abstandssensor (103, 203) und das Messobjekt (104, 204) axial überlappungsfrei hintereinander angeordnet sind.

8. Drehwinkelgeber (100, 200, 304) nach einem der vorangehenden Ansprüche, insbesondere nach Anspruch 7, **dadurch gekennzeichnet, dass** das Messobjekt (104, 204) als, insbesondere aus Metall hergestellte, Platte ausgeführt ist, die insbesondere an dem ersten Bauteil (101, 201) axial gehalten ist.

9. Drehwinkelgeber (100, 200, 304) nach einem der vorangehenden Ansprüche,
**dadurch gekennzeichnet, dass** der Abstandssensor (103, 203) drehfest, insbesondere positionsfest, am zweiten Bauteil (102, 202) befestigt ist,
insbesondere mittels einer Sensorbefestigung (1021, 2021) des zweiten Bauteils (102, 202), die zur Befestigung mit dem Abstandssensor (103, 203) kraft- und/oder formschlüssig zusammenwirkt.

10. Drehwinkelgeber (100, 200, 304) nach einem der vorangehenden Ansprüche,
**dadurch gekennzeichnet, dass** das erste Bauteil (101, 201) und das zweite Bauteil (102, 202) jeweils einen Befestigungsbereich (1012, 2012, 1022, 2022) zur Befestigung an relativ zueinander drehbaren Maschinenteilen aufweisen, wobei
eines der beiden Bauteile (101, 201, 102, 202) mittels seines Befestigungsbereichs (1012, 2012, 1022, 2022) an einem ersten der Maschinenteile axial positionsfest befestigbar ist und
das andere der beiden Bauteile (101, 201, 102, 202) mittels seines Befestigungsbereichs (1012, 2012, 1022, 2022) an einem zweiten der Maschinenteile axial verschiebbar befestigbar ist.

11. Drehwinkelgeber (100, 200, 304) nach einem der vorangehenden Ansprüche,
**dadurch gekennzeichnet, dass** das erste Bauteil (101, 201) und/oder das zweite Bauteil (102, 202) materialeinheitlich aus faserverstärktem Kunststoff hergestellt sind.

12. Drehwinkelgeber (100, 200, 304) nach einem der vorangehenden Ansprüche,
**dadurch gekennzeichnet, dass** das erste Bauteil (101, 201) und das zweite Bauteil (102, 202) durch eine Führung relativ zueinander axial, insbesondere gleitend, verschiebbar geführt sind.

13. Drehwinkelgeber (100, 200, 304) nach einem der vorangehenden Ansprüche,
**dadurch gekennzeichnet, dass** das erste Bauteil (101, 201) und das zweite Bauteil (102, 202)
koaxial zum Abstandssensor (103, 203) angeordnet sind und/oder
koaxial zu einer Drehachse von relativ zueinander drehbaren Maschinenteilen zur Erfassung einer Drehbewegung der Maschinenteile anordenbar ist.

14. Drehwinkelgeber (100, 200, 304) nach einem der vorangehenden Ansprüche,
**dadurch gekennzeichnet, dass**
a) der Drehwinkelgeber (100, 200, 304) aus dem ersten Bauteil (101, 201), dem zweiten Bauteil (102, 202) und dem Abstandssensor (103, 203) besteht;
und/oder
b) das erste Bauteil (101, 201) einstückig ausgeführt ist und/oder das zweite Bauteil (102, 202) einstückig ausgeführt ist, wobei weiterhin insbesondere das erste Bauteil (101, 201) und/oder das zweite Bauteil (102, 202) als Spritzgussteil ausgeführt ist.

15. **Vorrichtung** (300) zum Auf- und Abwickeln einer Leitungsführungseinrichtung (301), insbesondere einer Energieführungskette, zur geschützten Führung von Leitungen, Kabeln, Schläuchen oder dergleichen zwischen einer ersten Anschlussstelle und einer zu dieser relativbeweglichen zweiten Anschlussstelle; umfassend eine an einer Halterung (302) drehbar gelagerte Trommel (303) zum Auf- und Abwickeln der Leitungsführungseinrichtung (301);
**gekennzeichnet durch,**
einen an der Trommel (303) angeordneten Drehwinkelgeber (304) nach einem der vorangehenden Ansprüche 1 bis 14 zur Erfassung einer Drehbewegung der Trommel (303) beim Auf- und Abwickeln der Leitungsführungseinrichtung (301).

## Claims

1. Rotary encoder (100, 200, 304), in particular absolute value rotary encoder, for rotary motion detection, in particular for multi rotations, comprising
- a gear like arrangement with a first component (101, 201) and a second component (102, 202), for mechanical conversion of a rotational movement in a linear translational movement, which manipulates an axial relative position between both components (101, 201, 102, 202);
- a distance sensor (103, 203), in particular a non-contact distance sensor, for determining of a distance being dependent on the axial relative position to a measurement object (104, 204);
**characterized in:**
- **that** the first component (101, 201) and the second component (102, 202) are manufactured as plastic moulded parts, in particular as injection moulded parts; and
- **that** the gear like arrangement at the first component (101, 201) has a first thread (1020, 2010), which first thread (1020, 2010) interacts with a second thread (1020, 2020) at the distance sensor (103, 203) and/or at the second component (102, 202) for mechanical conversion of a rotational movement in a linear translational movement.

2. Rotary encoder (100, 200, 304) according to claim 1,
**characterized in that** the first thread (1010, 2010) is manufactured integrally with the first component (101, 201), wherein preferably at least the first component (101, 201) and/or the second component (102, 202) being manufactured as one piece plastic moulded part.

3. Rotary encoder (100, 200, 304) according to any one of claims 1 or 2, **characterized in that** at least a part of the second thread (1020, 2020), which interacts with the first thread (1010, 2010), is manufactured integrally with the second component (102, 202), wherein preferably the second thread (1020, 2020) is configured as an internal thread pointing towards the first component (101, 201).

4. The rotary encoder (100, 200, 304) according to any one of the preceding claims, **characterized in that** at least part of the second thread (1020, 2020), which interacts with the first thread (1010, 2010), is manufactured integrally with a portion of the distance sensor (103, 203), in particular with a sensor housing of the distance sensor (103, 203), which encloses a sensor component of the distance sensor (103, 203), in particular in a fluid-tight manner, wherein preferably the second thread (1020, 2020) is configured as an external thread pointing towards the first component (101, 201).

5. The rotary encoder (100, 200, 304) according to any one of the preceding claims,
**characterized in that** the first thread (1010, 2010) and/or the second thread (1020, 2020) comprises a flank angle of at least 40°, in particular of at least 55°.

6. The rotary encoder (100, 200, 304) according to any one of the preceding claims,
**characterized in that** the first thread (1010, 2010) and the second thread (1020, 2020) comprise corresponding thread pitches such that the gear like arrangement converts a rotary motion executed around a single revolution into a linear translational motion over a path of 0.25 mm to 25 mm, in particular of 0.5 mm to 10 mm.

7. The rotary encoder (100, 200, 304) according to any one of the preceding claims,
**characterized in that** the distance sensor (103, 203) is configured at least as an inductive sensor or as a capacitive sensor, wherein in particular the distance sensor (103, 203) and the measurement object (104, 204) are arranged axially one behind the other without overlapping.

8. The rotary encoder (100, 200, 304) according to any one of the preceding claims, in particular according to claim 7,
**characterized in that** the measurement object (104, 204) is configured as a plate, which is in particular manufactured of metal and which is in particular axially supported on the first component (101, 201).

9. The rotary encoder (100, 200, 304) according to any one of the preceding claims,
**characterized in that** the distance sensor (103, 203) is attached in a rotationally fixed manner, in particular in a positionally fixed manner, to the second component (102, 202), in particular by means of a sensor attachment (1021, 2021) of the second component (102, 202), which interacts with the distance sensor (103, 203) force fitting and/or form fitting for attachment.

10. The rotary encoder (100, 200, 304) according to any one of the preceding claims,
**characterized in that** the first component (101, 201) and the second component (102, 202) each comprise an attachment region (1012, 2012, 1022, 2022) for attachment to machine parts that are rotatable relative to one another, wherein
one of the two components (101, 201, 102, 202) can be, by means of its attachment region (1012, 2012, 1022, 2022), attached axially in a positionally fixed manner to a first one of the machine parts and
the other one of the two components (101, 201, 102, 202) can be, by means of its attachment region (1012, 2012, 1022, 2022), attached axially movably on a second one of the machine parts.

11. The rotary encoder (100, 200, 304) according to any one of the preceding claims,
**characterized in that** the first component (101, 201) and/or the second component (102, 202) are made of a same fiber-reinforced plastic.

12. The rotary encoder (100, 200, 304) according to any one of the preceding claims,
**characterized in that** the first component (101, 201) and the second component (102, 202) are guided axially, in particular slidingly, movably relative to one another by a guide.

13. The rotary encoder (100, 200, 304) according to any one of the preceding claims,
**characterized in that** the first component (101, 201) and the second component (102, 202)
are arranged coaxially to the distance sensor (103, 203)
and/or
can be arranged coaxially to an axis of rotation of machine parts which are rotatably relative to one another for detection of a rotary motion of the machine parts.

14. The rotary encoder (100, 200, 304) according to any one of the preceding claims,
**characterized in that**
a) the rotary encoder (100, 200, 304) consists of the first component (101, 201), the second component (102, 202) and the distance sensor (103, 203);
and/or
b) the first component (101, 201) is formed in one piece and/or the second component (102, 202) is formed in one piece, wherein in particular the first component (101, 201) and/or the second component (102, 202) are formed as injection moulding part.

15. **A device** (300) for winding and unwinding a cable guiding
device (301), in particular an energy guiding chain, for a protected guidance of lines, cables, hoses, or the like between a first connection position and a second connection position movable relative to the first connection position; comprising
a reel (303) rotatably mounted on a holder (302) for winding and unwinding the cable guiding device (301);
**characterized by**
a rotary encoder (304) according to any one of the preceding claims 1 to 14 arranged on the reel (303) for detection of a rotary motion of the reel (303) when winding and unwinding the cable guiding device (301).

## Revendications

1. Codeur rotatif (100, 200, 304), en particulier codeur rotatif absolu, pour la détection de mouvements rotatifs, en particulier pour des rotations multiples, comprenant
- un agencement de type engrenage, avec un premier composant (101, 201) et un deuxième composant (102, 202), pour la conversion mécanique d'un mouvement rotatif en un mouvement de translation linéaire, qui modifie une position relative axiale entre les deux composants (101, 201, 102, 202);
- un capteur de distance (103, 203), en particulier un capteur de distance sans contact, pour déterminer une distance dépendant de la position axiale relative par rapport à un objet à mesurer (104, 204);
**caractérisé en ce que**
- le premier composant (101, 201) et le deuxième composant (102, 202) sont fabriqués sous forme de pièces moulées en plastique, en particulier sous forme de pièces moulées par injection; et
- l'agencement en forme d'engrenage sur le premier composant (101, 201) comporte un premier filetage (1010, 2010) qui coopère avec un deuxième filetage (1020, 2020) sur le capteur de distance (103, 203) et/ou sur le deuxième composant (102, 202) pour convertir mécaniquement un mouvement de rotation en un mouvement de translation linéaire.

2. Codeur rotatif (100, 200, 304) selon la revendication 1, **caractérisé en ce que** le premier filetage (1010, 2010) est réalisé d'un seul tenant avec le premier composant (101, 201), au moins le premier composant (101, 201) et/ou le deuxième composant (102, 202) étant de préférence réalisés sous la forme d'une pièce moulée en plastique d'un seul tenant.

3. Codeur rotatif (100, 200, 304) selon l'une quelconque des revendications 1 ou 2,
**caractérisé en ce qu'**au moins une partie du deuxième filetage (1020, 2020) coopérant avec le premier filetage (1010, 2010) est réalisée d'un seul tenant avec le deuxième composant (102, 202), le deuxième filetage (1020, 2020) étant de préférence réalisé sous forme de filetage intérieur tourné vers le premier composant (101, 201).

4. Codeur rotatif (100, 200, 304) selon l'une quelconque des revendications précédentes,
**caractérisé en ce qu'**au moins une partie du deuxième filetage (1020, 2020) coopérant avec le premier filetage (1010, 2010) est réalisée d'un seul tenant avec une zone du capteur de distance (103, 203), en particulier avec un boîtier de capteur du capteur de distance (103, 203) qui entoure un composant du capteur de distance (103, 203), en particulier de manière étanche aux fluides, de préférence le deuxième filetage (1020, 2020) étant réalisé sous forme de filetage extérieur tourné vers le premier composant (101, 201).

5. Codeur rotatif (100, 200, 304) selon l'une quelconque des revendications précédentes,
**caractérisé en ce que** le premier filetage (1010, 2010) et/ou le deuxième filetage (1020, 2020) présentent un angle de flanc d'au moins 40°, en particulier d'au moins 55°.

6. Codeur rotatif (100, 200, 304) selon l'une quelconque des revendications précédentes,
**caractérisé en ce que** le premier filetage (1010, 2010) et le deuxième filetage (1020, 2020) présentent des pas de filetage correspondants de telle sorte que l'agencement en forme d'engrenage convertit un mouvement de rotation effectué d'un tour complet en un mouvement de translation linéaire sur une course de 0,25 mm à 25 mm, en particulier de 0,5 mm à 10 mm.

7. Codeur rotatif (100, 200, 304) selon l'une quelconque des revendications précédentes,
**caractérisé en ce que** le capteur de distance (103, 203) est agencé au moins en tant que capteur inductif ou en tant que capteur capacitif, en particulier le capteur de distance (103, 203) et l'objet à mesurer (104, 204) étant disposés axialement l'un derrière l'autre sans chevauchement.

8. Codeur rotatif (100, 200, 304) selon l'une quelconque des revendications précédentes, en particulier selon la revendication 7,
**caractérisé en ce que** l'objet à mesurer (104, 204) est réalisé sous la forme d'une plaque, en particulier en métal, qui est maintenue axialement en particulier sur le premier composant (101, 201).

9. Codeur rotatif (100, 200, 304) selon l'une quelconque des revendications précédentes,
**caractérisé en ce que** le capteur de distance (103, 203) est fixé de manière solidaire en rotation, en particulier de manière fixe en position, sur le deuxième composant (102, 202),
en particulier au moyen d'une fixation de capteur (1021, 2021) du deuxième composant (102, 202) qui coopère par complémentarité de forme et/ou par adhérence avec le capteur de distance (103, 203) pour la fixation.

10. Codeur rotatif (100, 200, 304) selon l'une quelconque des revendications précédentes,
**caractérisé en ce que** le premier composant (101, 201) et le deuxième composant (102, 202) présentent chacun une zone de fixation (1012, 2012, 1022, 2022) pour la fixation sur des pièces de machine pouvant tourner les unes par rapport aux autres,
l'un des deux composants (101, 201, 102, 202) pouvant être fixé axialement en position sur une première des parties de la machine au moyen de sa zone de fixation (1012, 2012, 1022, 2022) et
l'autre des deux composants (101, 201, 102, 202) pouvant être fixé de manière axialement déplaçable sur une deuxième des parties de la machine au moyen de sa zone de fixation (1012, 2012, 1022, 2022).

11. Codeur rotatif (100, 200, 304) selon l'une quelconque des revendications précédentes,
**caractérisé en ce que** le premier composant (101, 201) et/ou le deuxième composant (102, 202) sont fabriqués dans un matériau homogène en plastique renforcé de fibres.

12. Codeur rotatif (100, 200, 304) selon l'une quelconque des revendications précédentes,
**caractérisé en ce que** le premier composant (101, 201) et le deuxième composant (102, 202) sont guidés de manière à pouvoir se déplacer axialement, en particulier de manière coulissante, l'un par rapport à l'autre par un guidage.

13. Codeur rotatif (100, 200, 304) selon l'une quelconque des revendications précédentes,
**caractérisé en ce que** le premier composant (101, 201) et le deuxième composant (102, 202) sont disposés coaxialement au capteur de distance (103, 203) et/ou peuvent être disposés coaxialement à un axe de rotation de pièces de machine pouvant tourner les unes par rapport aux autres afin de détecter un mouvement de rotation des pièces de machine.

14. Codeur rotatif (100, 200, 304) selon l'une quelconque des revendications précédentes,
**caractérisé en ce que**
a) le codeur rotatif (100, 200, 304) est constitué du premier composant (101, 201), du deuxième composant (102, 202) et du capteur de distance (103, 203);
et/ou
b) le premier composant (101, 201) est réalisé d'un seul tenant et/ou le deuxième composant (102, 202) est réalisé d'un seul tenant, le premier composant (101, 201) et/ou le deuxième composant (102, 202) étant en outre réalisé(s) sous forme de pièce moulée par injection.

15. **Dispositif** (300) pour enrouler et dérouler un dispositif de guidage de conduites (301), en particulier une chaîne porte-câbles, pour le guidage protégé de conduites, câbles, tuyaux ou similaires entre un premier point de raccordement et un deuxième point de raccordement mobile par rapport à celui-ci; comprenant un tambour (303) monté de manière rotative sur un support (302) pour enrouler et dérouler le dispositif de guidage de câbles (301);
**caractérisé par**
un codeur rotatif (304) disposé sur le tambour (303), selon l'une quelconque des revendications 1 à 14 précédentes, pour détecter un mouvement de rotation du tambour (303) lors de l'enroulement et du déroulement du dispositif de guidage de câbles (301).
